(19) Europäisches Patentamt
European Patent Office
Office européen des brevets

(11) **EP 2 768 042 B1**

(12) **EUROPEAN PATENT SPECIFICATION**

(45) Date of publication and mention
of the grant of the patent:
**08.07.2015 Bulletin 2015/28**

(51) Int Cl.:
***H01M 2/02*** *(2006.01)*   ***H01M 2/04*** *(2006.01)*
***H01M 4/24*** *(2006.01)*   ***H01M 4/42*** *(2006.01)*
***H01M 4/48*** *(2010.01)*   ***H01M 6/04*** *(2006.01)*

(21) Application number: **14151303.6**

(22) Date of filing: **15.01.2014**

(54) **Electrochemical cell**

Elektrochemische Zelle

Cellule électrochimique

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.02.2013 JP 2013029041**

(43) Date of publication of application:
**20.08.2014 Bulletin 2014/34**

(73) Proprietor: **Seiko Instruments Inc.**
**Chiba-shi, Chiba (JP)**

(72) Inventor: **Itoh, Mitsunori**
**Chiba-shi,, Chiba (JP)**

(74) Representative: **Miller Sturt Kenyon**
**9 John Street**
**London WC1N 2ES (GB)**

(56) References cited:
**JP-A- H0 794 154      JP-A- H09 129 265**
**JP-A- 2006 004 698**

**Description**

BACKGROUND OF THE INVENTION

Field of the Invention

The technique of the present disclosure relates to flat cylindrical electrochemical cells.

Background Art

Alkaline primary batteries, a type of electrochemical cell, have been used as a power supply of electronic devices. Alkaline primary batteries having a flat cylindrical shape, or button-shaped batteries as they are often called, occupy only a small area in an electronic device, and are used in a variety of portable electronic devices (see, for example, JP-A-2006-302597).

JPH09129265 (A) discloses a battery which includes positive electrode formed in a pellet, comprising vanadium pentoxide, a conductive material and a binder is housed in a case also serving as a positive terminal through a positive current collector. An aluminum layer is previously formed with an aluminum clad material on the inside of a sealing plate also serving as a negative terminal, then a negative electrode made of an aluminum alloy capable of absorbing/releasing lithium is joined by ultrasonic welding onto the inner surface of the sealing plate. The sealing plate to which the negative electrode is joined by ultrasonic welding is placed on the positive electrode through a separator, then the case and the sealing plate are sealed.

Along with the trend for miniaturization of electronic devices that use alkaline primary batteries, there is a need for smaller and thinner alkaline primary batteries. In an effort to meet such demands, there have been studies to reduce the thickness of the metal plate forming a negative electrode canister.

In alkaline primary battery production, a cylindrical negative electrode canister with a lid portion is contained in a cylindrical positive electrode canister having a bottom portion, and the peripheral wall of the positive electrode canister is swaged to the peripheral wall of the negative electrode canister to seal the opening of the alkaline primary battery. Reducing the thickness of the metal plate forming the negative electrode canister can reduce the size and thickness of the alkaline primary battery, but lowers the mechanical strength of the negative electrode canister. This makes the negative electrode canister susceptible to deformation upon swaging the positive electrode canister, and easily causes leaking of the electrolytic solution between the negative electrode canister and the positive electrode canister. Such leaking in the alkaline primary battery needs to be suppressed in realizing smaller and thinner alkaline primary batteries.

The need to suppress leaking of the electrolytic solution exists not just in alkaline primary batteries, but in flat cylindrical electrochemical cells, for example, such as secondary batteries, and capacitors.

SUMMARY OF THE INVENTION

Accordingly, there is a need for an electrochemical cell having improved anti-leak property.

According to an aspect of the technique of the present disclosure, there is provided an electrochemical cell that includes a positive electrode canister having a form of a cylinder with a bottom portion, a negative electrode canister having a form of a cylinder with a lid portion and being contained in the positive electrode canister, and an electrolytic solution contained within a space formed by the positive electrode canister and the negative electrode canister. The negative electrode canister is formed into a shape of a double-step cylinder having decreasing inner diameters toward the lid portion, and the double-step cylinder has a first cylindrical portion that defines a cylindrical portion closer to the lid portion, and a second cylindrical portion that defines a cylindrical portion farther from the lid portion. The first cylindrical portion has a first inner curved surface that projects out at a first apex, and the second cylindrical portion has a second inner curved surface that projects out at a second apex. The angle made by the bottom portion and the straight line connecting the first apex and the second apex to each other ranges from 15° to 45°, and the positive electrode canister has an opening 11c with an annular end surface 11d disposed on an outer side of the first apex, with the opening of the positive electrode canister swaged to a peripheral wall of the negative electrode canister.

In the electrochemical cell according to the aspect of the technique of the present disclosure, the negative electrode canister does not easily deform upon the positive electrode canister being swaged to the peripheral wall of the negative electrode canister, as compared to when the angle is less than 15° or above 45°. Thus, a gap is less likely to form between the negative electrode canister and the positive electrode canister, or the lid portion of the negative electrode canister is less likely to dent, making it possible to suppress leaking of the contained electrolytic solution out of the electrochemical cell. That is, the electrochemical cell can have improved anti-leak property.

In an electrochemical cell according to another aspect of the technique of the present disclosure, the angle ranges from 20° to 30°.

In the electrochemical cell according to this aspect of the technique of the present disclosure, the negative electrode canister is less likely to undergo deformation that decreases the height of the negative electrode canister in the overlapping direction of the positive electrode canister and the negative electrode canister, specifically, in the height direction, as compared to when the angle is below 20°. Thus, the pressure inside the electrochemical cell is less likely to increase by the deformation of the negative electrode canister, helping to prevent leaking of the contained electrolytic solution out of the electrochemical cell.

Reducing the thickness of a cylindrical electrochemical cell typically decreases the volume of the positive electrode canister containing a positive electrode, and the volume of the negative electrode canister containing a negative electrode, and reduces the thicknesses of the positive electrode canister and the negative electrode canister in the direction these canisters overlap. In the electrochemical cell according to the foregoing aspect of the technique of the present disclosure, the end surface of the positive electrode canister is disposed on the outer side of the first apex of the negative electrode canister, specifically, on the side of the outward projection of the first cylindrical portion. Thus, a wider distance can be provided between the end surface at the opening of the positive electrode canister and the outer circumferential surface of the negative electrode canister, helping to prevent an electrical contact between the positive electrode canister and the negative electrode canister, as compared to when the angle is above 45°.

In an electrochemical cell according to another aspect of the technique of the present disclosure, the first inner curved surface and the second inner curved surface have the same curvature radius.

In the electrochemical cell according to this aspect of the technique of the present disclosure, the external force that acts on the peripheral wall of the negative electrode canister can be prevented from unevenly acting on the first cylindrical portion and the second cylindrical portion, as compared to when the first inner curved surface and the second inner curved surface have different curvature radii. This makes neither of the first cylindrical portion and the second cylindrical portion more deformable than the other, and suppresses large deformation only in a part of the peripheral wall of the negative electrode canister.

The present invention further provides a method of manufacturing an electrochemical cell including the steps of providing a positive electrode canister having a form of a cylinder with a bottom portion and an opening, providing a negative electrode canister having the form of a cylinder with a lid portion, the negative electrode taking the shape of a double-step cylinder having decreasing inner diameters toward the lid portion, the double-step cylinder having a first cylindrical portion that defines a cylindrical portion closer to the lid portion, and a second cylindrical portion that defines a cylindrical portion farther from the lid portion, such that the first cylindrical portion has a first inner curved surface projects out at a first apex, and the second cylindrical portion has a second inner curved surface that projects out at a second apex, and the angle made by the bottom portion and the straight line connecting the first apex and the second apex to each other ranges from 15° to 45°, the negative electrode canister being contained in the positive electrode canister, and providing an electrolytic solution contained within a space formed by the positive electrode canister and the negative electrode canister, swaging the opening of the positive electrode canister to a peripheral wall of the negative electrode canister so that an annular end embodiment.

## DESCRIPTION OF THE PREFERRED EMBODIMENT

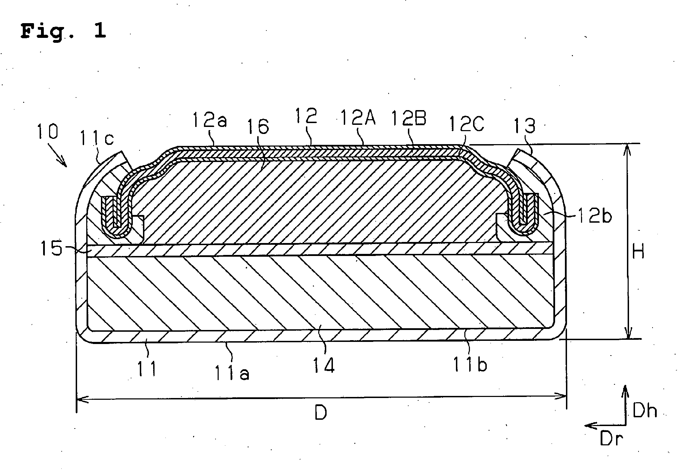

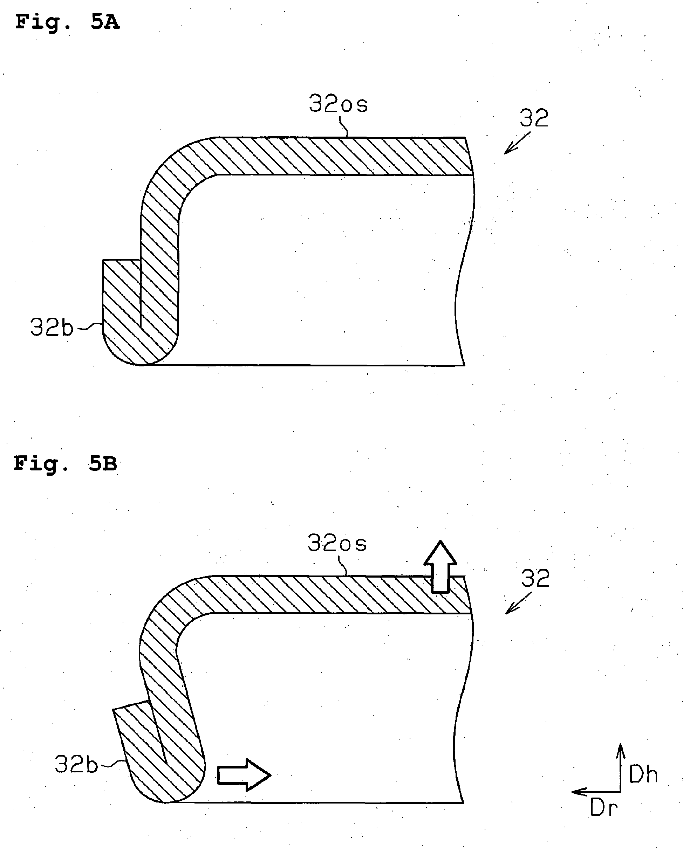

A silver oxide battery as an embodiment of the electrochemical cell is described below with reference to FIG. 1 to FIGS. 5A and 5B. The silver oxide surface is disposed on an outer side of the first apex of the negative electrode canister, and such that the angle before swaging is $\theta b$ and the angle after swaging is $\theta a$, and the angle satisfies the formula $(\theta a - 5°) \leq \theta b\ (= \theta) \leq (\theta a + 5°)$.

## BRIEF DESCRIPTION OF THE DRAWINGS

Embodiments of the present invention will now be described by way of further example only and with reference to the accompanying drawings, in which:

FIG. 1 is a cross sectional view illustrating the cross sectional structure of a silver oxide battery according to an embodiment of the technique of the present disclosure.

FIG. 2 is a partially magnified cross sectional view illustrating a part of the cross sectional structure of a negative electrode canister.

FIG. 3 is a partially magnified cross sectional view illustrating a part of the cross sectional structures of a positive electrode canister and the negative electrode canister.

FIG. 4A is a partial cross sectional view illustrating the shape of the negative electrode canister of an Example of the present invention before swaging, and FIG. 4B is a partial cross sectional view illustrating the shape of the negative electrode canister after swaging.

FIG. 5A is a partial cross sectional view illustrating the shape of the negative electrode canister of Comparative Example before swaging, and FIG. 5B is a partial cross sectional view illustrating the shape of the negative electrode canister after swaging.

FIG. 6 is a diagram explaining the bend angle of a variation of the surface 11b of the positive electrode canister 11. The positive electrode 14 has a solid form configured from positive electrode active material, for example, such as silver oxide, and manganese dioxide-added silver oxide. The positive electrode 14 may contain a conductive auxiliary agent, for example, such as graphite and black lead, or may be a mixture of the positive electrode active material, the conductive auxiliary agent, and a binder such as sodium polyacrylate.

A disc-shaped separator 15 is disposed on the positive electrode 14. The separator 15 is a porous film configured from, for example, polyethylene. The separator 15 may be a porous film configured form cellophane or polypropylene. Further, the separator 15 may be a laminate of a porous film, and a nonwoven fabric configured from, for example, polyolefin fiber or polyamide fiber. The separator 15 is impregnated with an alkaline electrolytic solution, for example, such as a sodium hydroxide aqueous solution, a potassium hydroxide aqueous solution, and a mixture of these aqueous solutions.

A disc-shaped gelatinous negative electrode 16 is placed on the separator 15, inside the space surrounded by the separator 15, the gasket 13, and the negative electrode canister 12. The negative electrode 16 is a mixture of, for example, a negative electrode active material (such as zinc and a zinc alloy), a binder (such as sodium polyacrylate), a gelatinizer (such as carboxymethylcellulose), and the alkaline electrolytic solution.

The silver oxide battery 10 has an outer diameter of, for example, 9.5 mm. The height is 2.0 mm as measured from the outer surface of the bottom portion 11a of the positive electrode canister 11 to the outer surface of the lid portion 12a of the negative electrode canister 12. Here, the direction along the height of the silver oxide battery 10 is defined as height direction Dh, and the direction along the radius of the bottom portion 11a of the positive electrode canister 11, and the radius of the lid portion 12a of the negative electrode canister 12 is defined as radial direction Dr.

Configuration of Negative Electrode Canister

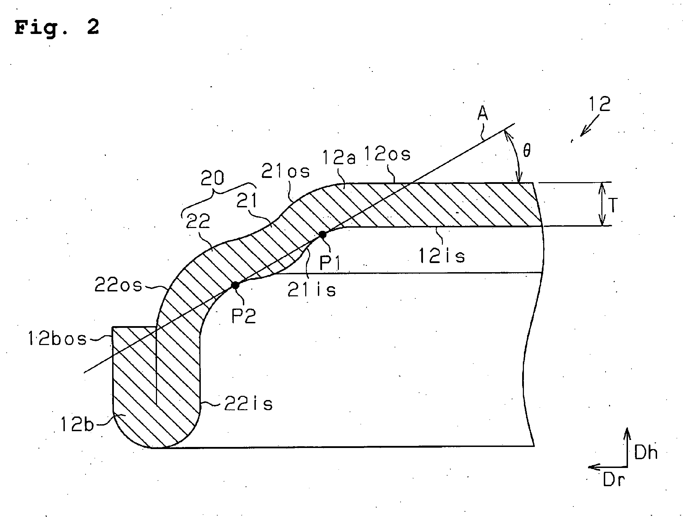

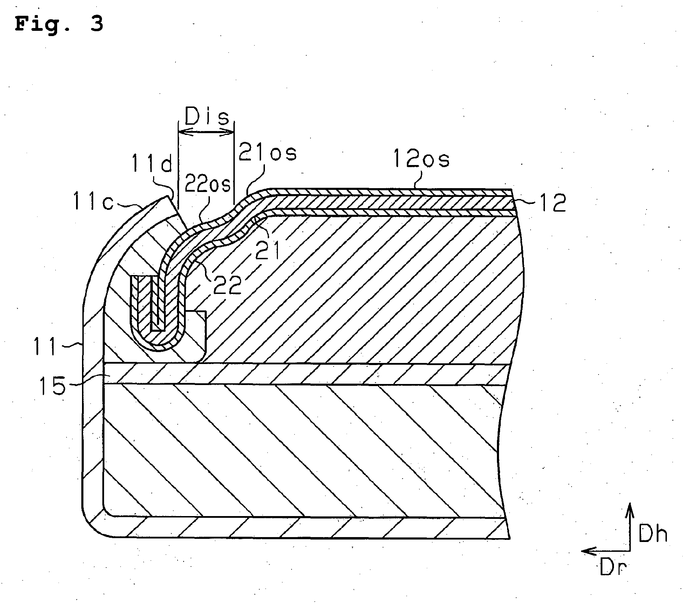

The configuration of the negative electrode canister 12 is described below in greater detail with reference to FIGS. 2 and 3. FIG. 2 illustrates the shape of the negative electrode canister 12 before the positive electrode canister 11 is swaged to the negative electrode canister 12. FIG. 3 illustrates the shapes of the negative electrode canister 12 and the positive electrode canister 11 after the positive electrode canister 11 is swaged to the negative electrode canister 12.

As illustrated in FIG. 2, the negative electrode canister 12 is configured from the lid portion 12a having a form of a disc, a double-step cylindrical portion 20 that extends downwardly from the outer rim of the lid portion 12a along the height direction Dh in the plane of the paper, and the folded portion 12b folded back upwardly along the height direction Dh in the plane of the paper at the far end of the double-step cylindrical portion 20 from the lid portion 12a. The double-step cylindrical portion 20 and the folded portion 12b are formed by, for example, press working. The thickness T from the outer surface to the inner surface of the negative electrode canister 12 is, for example, 0.10 mm to 0.40 mm.

The double-step cylindrical portion 20 is configured from a first cylindrical portion 21 and a second cylindrical portion 22, occurring in this order from the side closer to the lid portion 12a. The inner diameter of the first cylindrical portion 21 is smaller than the inner diameter of the second cylindrical portion 22. Specifically, the double-step cylindrical portion 20 has decreasing inner diameters toward the lid portion 12a.

The first cylindrical portion 21 is curved by projecting out along a first outer curved surface 21os and a first inner curved surface 21is, which extend downward along the height direction in the plane of the paper. Here, the outward projection (or curvature) of the first inner curved surface 21is is the greatest at a first apex P1 where the first inner curved surface 21is meets the inner surface 12is of the lid portion 12a.

As with the first cylindrical portion 21, the second cylindrical portion 22 is curved by projecting out along a second outer curved surface 22os and a second inner curved surface 22is, which extend downward along the height direction in the plane of the paper. In the second cylindrical portion 22, the second outer curved surface 22os as a whole is on the outer side of the first outer curved surface 21os in the radial direction, and the second inner curved surface 22is as a whole is on the outer side of the first inner curved surface 21is in the radial direction. The outward projection (or curvature) of the second inner curved surface 22is is the greatest at a second apex P2 between the first inner curved surface 21is and an outer circumferential surface 12bos of the folded portion 12b. In the second inner curved surface 22is, the curved surface including the second apex P2 has the same curvature radius as the curved surface that includes the first apex P1 on the first inner curved surface 21is.

With the configuration where the curved surface including the second apex P2 has the same curvature radius as the curved surface that includes the first apex P1, the external force that acts on the peripheral wall of the negative electrode canister 12 can be prevented from unevenly acting on the first cylindrical portion 21 and the second cylindrical portion 22. This makes neither of the first cylindrical portion 21 and the second cylindrical portion 22 more deformable than the other, and suppresses large deformation only in a part of the peripheral wall of the negative electrode canister 12.

Here, bend angle $\theta$ is defined as the angle made by the straight line A connecting the first apex P1 to the second apex P2, and the horizontal direction, specifically, the angle made by straight line A and the outer surface (top surface 12os) of the lid portion 12a of the negative electrode canister 12, or the outer surface of the bottom portion 11a of the positive electrode canister 11. The bend angle $\theta$ ranges preferably from 15° to 45°, further preferably from 20° to 30°.

With a bend angle $\theta$ of 15° to 45°, the negative electrode canister 12 is less likely to undergo deformation upon the positive electrode canister 11 being swaged to the peripheral wall of the negative electrode canister 12, as compared to when the bend angle $\theta$ is greater than 45°. More specifically, there will be less amount of change in the outer diameter of the negative electrode canister 12, specifically the radial distance from the folded portion 12b toward the center.

With the configuration involving less amount of change at the folded portion 12b, the distance from the inner surface of the positive electrode canister 11 to the outer surface of the negative electrode canister 12 will not greatly increase, and a gap is less likely to form between the outer surface of the negative electrode canister 12 and the inner surface of the gasket 13. Accordingly, the electrolytic solution in the silver oxide battery 10 is less likely to leak out of the silver oxide battery 10 passing between the outer surface of the negative electrode canister 12 and the inner surface of the gasket 13. That is, the silver oxide battery 10 can have an improved anti-leak property.

Further, with a bend angle $\theta$ confined in the foregoing range, there will be less amount of change that increases or decreases the height of the negative electrode canister 12, as compared to when the bend angle $\theta$ is below 15° or above 45°. Specifically, there will be less amount of change that increases or decreases the distance between the top surface 12os of the negative electrode canister 12 and the plane that includes the boundary portion of the second cylindrical portion 22 and the folded portion 12b.

When change that increases the height of the negative electrode canister 12 occurs, the negative electrode canister 12 is deformed in a manner that stretches the double-step cylindrical portion 20 along the height direction Dh. In this case, the lid portion 12a of the negative electrode canister 12 expands upward along the height direction Dh, and, when such an expansion exceeds the predetermined range, the height of the silver oxide battery 10 exceeds the acceptable height range that takes into account the standard value specified for the height of the silver oxide battery 10.

On the other hand, change that decreases the height of the negative electrode canister 12 reduces the inner volume of the silver oxide battery 10, and increases the pressure inside the silver oxide battery 10. The electrolytic solution contained in the silver oxide battery 10 is thus more likely to leak out of the silver oxide battery 10.

In this respect, the configuration with a bend angle $\theta$ confined in the foregoing range can suppress amounts of change that increase and decrease the height of the negative electrode canister 12, and helps prevent a leak of the electrolytic solution in the silver oxide battery 10. Specifically, the anti-leak property can be improved while keeping the height of the silver oxide battery 10 within the predetermined range, for example, within an amount of change of $\pm$ 0.02 mm from the standard value of, for example, 2.0 mm specified for the silver oxide battery 10. The amount of change along the height direction of the negative electrode canister 12 can be particularly reduced when the bend angle $\theta$ falls between 20° and 30°.

It should be noted here that the negative electrode canister 12 satisfying the foregoing bend angle $\theta$ range undergoes very small changes in height and outer diameter, and accordingly the bend angle $\theta$ before the swaging of the positive electrode canister 11 to the peripheral wall of the negative electrode canister 12 is almost equal to the bend angle $\theta$ after the swaging of the positive electrode canister 11 to the peripheral wall of the negative electrode canister 12. When the bend angle $\theta$ before swaging is $\theta b$, and the bend angle $\theta$ after swaging is $\theta a$, the bend angle $\theta a$ satisfies the following formula.

$$(\theta a - 5°) \leq \theta b \ ( = \theta) \leq (\theta a + 5°)$$

As illustrated in FIG. 3, the opening 11c of the positive electrode canister 11 swaged to the peripheral wall of the negative electrode canister 12 has an annular end surface 11d. The end surface 11d is disposed on the outer side of the first apex P1 of the negative electrode canister 12, specifically, to the side of the outward projection of the first cylindrical portion 21.

For change that decreases the height of the silver oxide battery 10, smaller heights are set for the positive electrode canister 11 and the negative electrode canister 12 to maintain the volume of the negative electrode 16 in predetermined proportion to the volume of the positive electrode 14. Here, the configuration in which the end surface 11d is disposed on the radially outer side of the first apex P1 increases the distance between the end surface 11d of the positive electrode canister 11 and the top surface 12os of the negative electrode canister 12, and the distance Dis between the end surface 11d of the positive electrode canister 11 and the outer circumferential surface of the second cylindrical portion 22, as compared to when the bend angle $\theta$ is greater than 45°. This helps prevent an electrical contact between the positive electrode canister 11 and the negative electrode canister 12, and thus shorting of the positive electrode canister 11 and the negative electrode canister 12.

Examples

Silver oxide batteries were produced that had an outer diameter D of 9.5 mm, a height H of 2.0 mm, and varying negative electrode canister bend angles θ. The negative electrode canister had a thickness T of 0.2 mm. The folded portion and the double-step cylindrical portion of the negative electrode canister were formed by press working. Each silver oxide battery was disassembled, and the negative electrode canister was removed from the positive electrode canister swaged thereto, and was measured for outer diameter and height. The difference in the outer diameter of the negative electrode canister of each silver oxide battery before and after the swaging was calculated as outer diameter amount of change Dc, and the height difference before and after the swaging was calculated as height amount of change Hc. Here, the outer diameter at the folded portion was defined as the outer diameter Dn of the negative electrode canister, and the distance between the outer surface of the lid portion, and the plane including the boundary portion of the second cylindrical portion and the folded portion was defined as the height Hn of the negative electrode canister.

Each silver oxide battery was placed in an environment where the temperature was 45°C and the relative humidity was 93%, and days before the electrolytic solution leaked out of the silver oxide battery were measured as an index of anti-leak property. Note that the battery was deemed as leaking when the electrolytic solution reached the top surface of the negative electrode canister, and each 20 successive day period of no leak was translated into an additional 1 year of maintained anti-leak property.

Table 1 presents the pre-swaging bend angle θ, the outer diameter amount of change Dc, the height amount of change Hc, and the duration of maintained anti-leak property of each silver oxide battery. Each value was calculated as the mean value of 20 individual silver oxide batteries. The symbol "-" in outer diameter amount of change Dc represents an amount of change that decreases the outer diameter. The symbols "+" and "-" in height amount of change Hc represent amounts of change that increase and decrease the height, respectively.

Table 1

|  | θ (°) | Dc (mm) | Hc (mm) | Anti-leak property (years) |
|---|---|---|---|---|
| Com. Ex. 1 | -(Single step) | -0.10 | +0.05 | 2 |
| Com. Ex. 2 | 60 | -0.07 | +0.03 | 2 |
| Ex. 1 | 45 | -0.02 | +0.01 | 4 |
| Ex. 2 | 30 | -0.01 | 0 | 5 |
| Ex. 3 | 20 | 0 | 0 | 5 |
| Ex. 4 | 15 | 0 | -0.02 | 4 |
| Com. Ex. 3 | 10 | 0 | -0.04 | 3 |

Example 1

In the silver oxide battery that had a negative electrode canister bend angle θ of 45°, the amount of change Dc of outer diameter Dn was - 0.02 mm, and the amount of change Hc of height Hn was + 0.01 mm. The duration of maintained anti-leak property was 4 years.

Example 2

In the silver oxide battery that had a negative electrode canister bend angle θ of 30°, the amount of change Dc of outer diameter Dn was - 0.01 mm, and the amount of change Hc of height Hn was 0 mm. The duration of maintained anti-leak property was 5 years.

Example 3

In the silver oxide battery that had a negative electrode canister bend angle θ of 20°, the amount of change Dc of outer diameter Dn was 0 mm, and the amount of change Hc of height Hn was 0 mm. The duration of maintained anti-leak property was 5 years.

Example 4

In the silver oxide battery that had a negative electrode canister bend angle θ of 15°, the amount of change Dc of outer diameter Dn was 0 mm, and the amount of change Hc of height Hn was - 0.02 mm. The duration of maintained anti-leak property was 4 years.

Comparative Example 1

In the silver oxide battery with a single-step cylindrical negative electrode canister, the amount of change Dc of outer diameter Dn was - 0.10 mm, and the amount of change Hc of height Hn was + 0.05 mm. The duration of maintained anti-leak property was 2 years.

Comparative Example 2

In the silver oxide battery that had a negative electrode canister bend angle θ of 60°, the amount of change Dc of outer diameter Dn was - 0.07 mm, and the amount of change Hc of height Hn was + 0.03 mm. The duration of maintained anti-leak property was 2 years.

Comparative Example 3

In the silver oxide battery that had a negative electrode canister bend angle θ of 10°, the amount of change Dc of outer diameter Dn was 0 mm, and the amount of change Hc of height Hn was - 0.04 mm. The duration of maintained anti-leak property was 3 years.

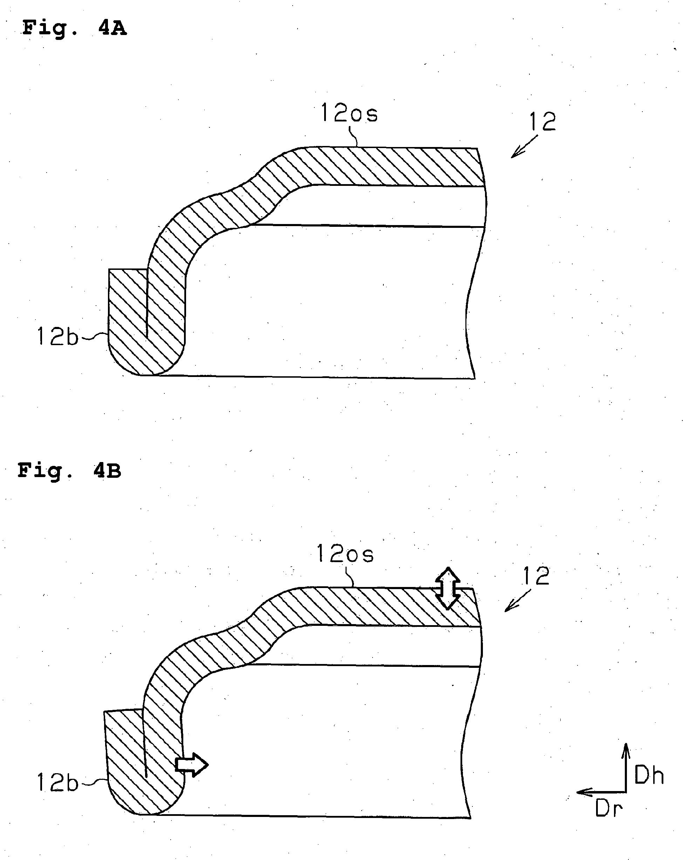

As illustrated in FIGS. 4A and 4B, the following results were obtained from the negative electrode canisters 12 of Examples 1 to 4, specifically from the negative electrode canisters 12 that had bend angles θ of 15° to 45°. Referring to FIG. 4B representing the shape after swaging, the amount of change Dc of outer diameter Dn was -0.02 mm to 0 mm, and the amount of change Hc of height Hn was -0.02 mm to + 0.01 mm as compared to the pre-swaging shape shown in FIG. 4A. In the negative electrode canister 12 that had a bend angle θ of 20°, there was no change in outer diameter Dn and height Hn. The duration of maintained anti-leak property was 4 years or more. Larger bend angles θ tended to increase the amount of change Dc of outer diameter Dn. Above a bend angle θ of 30°, the amount of change Hc of height Hn tended to increase, whereas the height Hn tended to decrease below a bend angle θ of 20°.

On the other hand, the following results were obtained from negative electrode canister 32 of Comparative Example 1, specifically from the single-step cylindrical negative electrode canister 32 shown in FIGS. 5A and 5B. Similar results were obtained from the negative electrode canisters of Comparative Examples 2 and 3, specifically from the negative electrode canisters that had a bend angle θ below 15° or above 45°, even though these negative electrode canisters had the double-step cylindrical construction as in the Example represented in FIGS. 4A and 4B. Specifically, the absolute value of the amount of change Hc of height Hn was 0.03 mm to 0.05 mm, and the duration of maintained anti-leak property was 3 years or less. The amount of change Dc of outer diameter Dn abruptly increased particularly when the bend angle θ exceeded 45°, as compared to when the bend angle θ was 10° to 45°.

In Comparative Example 3, despite the amount of change Dc of outer diameter Dn being 0 mm, the duration of maintained anti-leak property was shorter than in Examples 1 and 2 that showed greater amounts of change Dc of outer diameter Dn. This is suggestive of the following. Specifically, in the configuration that involves swaging of the positive electrode canister, the stress that acts on the peripheral wall of the negative electrode canister acts inwardly along the radial direction. Here, in the configuration with a bend angle θ above 45°, the negative electrode canister has the outer shape similar to the single-step cylindrical shape, and the stress causes the lid portion of the negative electrode canister to expand outward, and inwardly deforms the peripheral wall of the negative electrode canister in the radial direction over the entire circumference. On the other hand, in the configuration with a bend angle θ below 15°, the negative electrode canister has the outer shape that resembles a hemisphere, and the stress is more likely to dent the lid portion of the negative electrode canister inward, rather than acting to inwardly deform the peripheral wall of the negative electrode canister in the radial direction over the entire circumference. Note that the extent of the displacement of the lid portion or the peripheral wall of the negative electrode canister depends on such factors as the material of the negative electrode canister, and the extent of the swaging of the positive electrode canister. However, the patterns of deformation observed above, particularly the abrupt increase of amount of change Dc above a bend angle θ of 45° are maintained by the bend angle θ.

As described above, it was possible in the negative electrode canisters of Examples 1 to 4 to suppress the radial inward deformation of the double-step cylindrical portion of the negative electrode canister, and the upward and downward deformation of the double-step cylindrical portion and the lid portion in the height direction. As a result, it was possible to maintain the anti-leak property over extended time periods, or, specifically, improve the anti-leak property.

The same or similar results were obtained, provided that the thickness T of the negative electrode canister was confined in a range of 0.10 mm to 0.40 mm.

As demonstrated above, the embodiment can have the following advantages.

(1) The negative electrode canister 12 does not easily deform upon the positive electrode canister 11 being swaged to the peripheral wall of the negative electrode canister 12, as compared to the configuration with a bend angle $\theta$ of less than 15° or above 45°. Thus, a gap is less likely to form between the negative electrode canister 12 and the positive electrode canister 11, or the lid portion 12a of the negative electrode canister 12 is less likely to dent, making it possible to suppress leaking of the contained electrolytic solution out of the silver oxide battery 10. That is, the silver oxide battery 10 can have improved anti-leak property.

(2) The height Hn of the negative electrode canister 12 is less likely to decrease in height direction Dh when the bend angle $\theta$ ranges from 20° to 30°, as compared to the configuration with a bend angle $\theta$ below 20°. Thus, the pressure inside the silver oxide battery 10 is less likely to increase by the deformation of the negative electrode canister 12, helping to prevent leaking of the contained electrolytic solution out of the silver oxide battery 10.

(3) A wider distance can be provided between the end surface 11d of the positive electrode canister 11 and the outer circumferential surface of the negative electrode canister 12, helping to prevent an electrical contact between the positive electrode canister 11 and the negative electrode canister 12, as compared to the configuration with a bend angle $\theta$ above 45°.

(4) The external force that acts on the peripheral wall of the negative electrode canister 12 can be prevented from unevenly acting on the first cylindrical portion 21 and the second cylindrical portion 22. This makes neither of the first cylindrical portion 21 and the second cylindrical portion 22 more deformable than the other, and suppresses large deformation only in a part of the peripheral wall of the negative electrode canister 12.

The embodiment of implementation described above may be appropriately altered as follows.

The curvature radius of the first inner curved surface 21is of the first cylindrical portion 21 may be different from the curvature radius of the second inner curved surface 22is of the second cylindrical portion 22. The advantage according to (1) above also may be obtained with such a configuration, provided that the bend angle $\theta$ ranges from 15° to 45°.

It is not necessarily required to dispose the end surface 11d of the positive electrode canister 11 on the outer side of the first apex P1. For example, the end surface 11d may be disposed on the outer side in the radial direction in a position closer to the lid portion 12a than the first apex P1, or may be disposed on the outer side in the radial direction in a position closer to the bottom portion 11a of the positive electrode canister 11 than the first apex P1. An electrical contact between the positive electrode canister 11 and the negative electrode canister 12, and shorting of the positive electrode canister 11 and negative electrode canister 12 also can be suppressed with such a configuration, provided that the bend angle $\theta$ of the negative electrode canister 12 ranges from 15° to 45°.

The bend angle $\theta$ is not necessarily required to fall in the range of 20° to 30°, and may be confined in some other range within the 15° to 45° range, specifically in a range of 15° or more and less than 20°, or a range of more than 30° and 45° or less. The advantage according to (1) above also may be obtained with such a configuration, provided that the bend angle $\theta$ ranges from 15° to 45°.

The negative electrode canister 12 is not limited to the clad material of a three-layer structure, and may be formed by, for example, at least one of a nickel layer, a stainless steel layer, and a copper layer. Other metallic materials also may be used as the materials of the negative electrode canister 12. Assuming that the magnitude of the force exerted by the swaging of the positive electrode canister 11 to the negative electrode canister 12 is set according to each material, the advantage according to the (1) above also may be obtained regardless of which metal is used to form the negative electrode canister 12, provided that the bend angle $\theta$ ranges from 15° to 45°.

The material used to form the positive electrode canister 11 may be iron or stainless steel plated with a metal layer other than a nickel layer, or iron or stainless steel without a plated layer. Metals other than iron and stainless steel also may be used as the material used to form the positive electrode canister 11.

The materials used to form the gasket 13, the positive electrode 14, the separator 15, and the negative electrode 16 of the silver oxide battery 10 may be materials different from those described above. Further, an alkaline aqueous solution different from those described above may be used for the electrolytic solution. That is, the materials used to form the battery components may be appropriately changed to such an extent that the silver oxide battery 10 remains functional.

The foregoing embodiment was described through the case where the electrochemical cell is the silver oxide battery 10, an example of alkaline primary batteries. However, the invention is not limited to this embodiment, and the electrochemical cell may be realized as, for example, another alkaline primary battery, a lithium primary battery, a zinc-air battery, a lithium secondary battery, or a capacitor. The advantage according to (1) above also may be obtained, provided that the electrochemical cell has a flat cylindrical configuration, and that the bend angle $\theta$ of the negative electrode canister ranges from 15° to 45°.

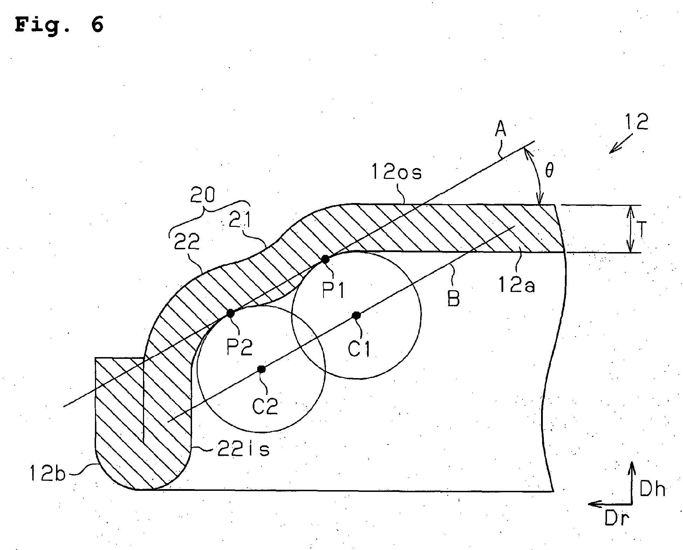

As represented in FIG. 6, the bend angle θ has the same definition as the angle made by the horizontal direction and the straight line B that connects the curvature center C1 of the first inner curved surface 21is of the first cylindrical portion 21 and the curvature center C2 of the second inner curved surface 22is of the second cylindrical portion 22. The advantage according to (1) above also may be obtained even when the first inner curved surface 21is and the second inner curved surface 22is have different curvature radii, provided that the bend angle θ ranges from 15° to 45°.

Additional Remark

The following technical idea can be grasped from the foregoing variations.
An electrochemical cell including:

a positive electrode canister having a form of a cylinder with a bottom portion;
a negative electrode canister having a form of a cylinder with a lid portion and being contained in the positive electrode canister; and
an electrolytic solution contained within a space formed by the positive electrode canister and the negative electrode canister,
wherein the negative electrode canister is formed into a shape of a double-step cylinder having decreasing inner diameters toward the lid portion,

the double-step cylinder having a first cylindrical portion that defines a cylindrical portion closer to the lid portion, and a second cylindrical portion that defines a cylindrical portion farther from the lid portion,
the first cylindrical portion having a first inner curved surface with a curvature center defining a first curvature center,
the second cylindrical portion having a second inner curved surface with a curvature center defining a second curvature center,
the angle made by the bottom portion and the straight line connecting the first curvature center and the second curvature center to each other ranging from 15° to 45°.

## Claims

1. An electrochemical cell (10) comprising:

a positive electrode canister (11) having a form of a cylinder with a bottom portion (11a);
a negative electrode canister (12) having a form of a cylinder with a lid portion (12a) and being contained in the positive electrode canister; and
an electrolytic solution contained within a space formed by the positive electrode canister and the negative electrode canister,
wherein the negative electrode canister is formed into a shape of a double-step cylinder having decreasing inner diameters toward the lid portion,

the double-step cylinder having a first cylindrical portion that defines a cylindrical portion closer to the lid portion, and a second cylindrical portion that defines a cylindrical portion farther from the lid portion,
the first cylindrical portion having a first inner curved surface (21is) that projects out at a first apex (P1),
the second cylindrical portion having a second inner curved surface (22is) that projects out at a second apex (P2),
and

the positive electrode canister has an opening (11c) with an annular end surface (11d) disposed on an outer side of the first apex (P1),
**characterised in that** the angle (θ) made by the bottom portion (11a) and the straight line (A) connecting the first apex (P1) and the second apex (P2) to each other range from 15° to 45°; and
the opening (11c) of the positive electrode canister (11) is swaged to a peripheral wall of the negative electrode canister (12).

2. The electrochemical cell according to claim 1, wherein the angle ranges from 20° to 30°.

3. The electrochemical cell according to claim 1 or 2, wherein the first inner curved surface (21is) and the second inner curved surface (22is) have the same curvature radius.

4. A method of manufacturing an electrochemical cell (10) including the steps of:

providing a positive electrode canister (11) having a form of a cylinder with a bottom portion (11a) and an opening (11c);

providing a negative electrode canister (12) having the form of a cylinder with a lid portion (12a), the negative electrode (12) taking the shape of a double-step cylinder having decreasing inner diameters toward the lid portion, the double-step cylinder having a first cylindrical portion that defines a cylindrical portion closer to the lid portion, and a second cylindrical portion that defines a cylindrical portion farther from the lid portion, such that the first cylindrical portion has a first inner curved surface (21is) projects out at a first apex (P1), and the second cylindrical portion has a second inner curved surface (22is) that projects out at a second apex (P2), and the angle (θ) made by the bottom portion (11a) and the straight line (A) connecting the first apex (P1) and the second apex (P2) to each other ranges from 15° to 45°, the negative electrode canister (12) being contained in the positive electrode canister (11); and

providing an electrolytic solution contained within a space formed by the positive electrode canister (11) and the negative electrode canister (12),

swaging the opening (11c) of the positive electrode canister (11) to a peripheral wall of the negative electrode canister (12) so that an annular end surface (11d) is disposed on an outer side of the first apex (P1) of the negative electrode canister (11), and such that the angle (θ) before swaging is θb and the angle (θ) after swaging is θa, and the angle (θ) satisfies the formula:

$$(\theta a - 5^{o}) \leq \theta b\ (= \theta) \leq (\theta a + 5^{o}).$$

5. The method of claim 4, wherein the angle ranges from 20° to 30°.

6. The method of claims 4 or 5, wherein the first inner curved surface (21is) and the second inner curved surface (22is) have the same curvature radius.


**Patentansprüche**

1. Elektrochemische Zelle (10), umfassend:

einen positiven Elektrodenkanister (11) in einer Form eines Zylinders mit einem Bodenabschnitt (11a);
einen negativen Elektrodenkanister (12) in einer Form eines Zylinders mit einem Deckelabschnitt (12a), der im positiven Elektrodenkanister enthalten ist; und
eine elektrolytische Lösung, die in einem Raum enthalten ist, der durch den positiven Elektrodenkanister und den negativen Elektrodenkanister gebildet wird,
wobei der negative Elektrodenkanister in einer Form eines doppelstufigen Zylinders mit abnehmenden Innendurchmessern zum Deckelabschnitt hin gestaltet ist,

wobei der doppelstufige Zylinder einen ersten zylindrischen Abschnitt, der einen zylindrischen Abschnitt näher zum Deckelabschnitt definiert, und einen zweiten zylindrischen Abschnitt, der einen zylindrischen Abschnitt weiter weg vom Deckelabschnitt definiert, aufweist,
wobei der erste zylindrische Abschnitt eine erste gekrümmte Innenfläche (21is) aufweist, die an einem ersten Scheitelpunkt (P1) herausragt,
der zweite zylindrische Abschnitt eine zweite gekrümmte Innenfläche (22is) aufweist, die an einem zweiten Scheitelpunkt (P2) herausragt,

und
der positive Elektrodenkanister eine Öffnung (11c) mit einer ringförmigen Stirnfläche (11d) aufweist, die an einer Außenseite des ersten Scheitelpunkts (P1) angeordnet ist,
**dadurch gekennzeichnet, dass** der Winkel (θ), der durch den Bodenabschnitt (11a) und die gerade Linie (A) gebildet wird, die den ersten Scheitelpunkt (P1) und den zweiten Scheitelpunkt (P2) verbindet, von 15° bis 45° reicht; und

die Öffnung (11c) des positiven Elektrodenkanisters (11) zu einer peripheren Wand des negativen Elektrodenkanisters (12) verpresst ist.

2. Elektrochemische Zelle nach Anspruch 1, wobei der Winkel von 20° bis 30° reicht.

3. Elektrochemische Zelle nach Anspruch 1 oder 2, wobei die erste gekrümmte Innenfläche (21is) und die zweite gekrümmte Innenfläche (22is) denselben Krümmungsradius haben.

4. Verfahren zur Herstellung einer elektrochemischen Zelle (10) enthaltend die Schritte:

Vorsehen eines positiven Elektrodenkanisters (11) mit einer Form eines Zylinders mit einem Bodenabschnitt (11a) und einer Öffnung (11c);
Vorsehen eines negativen Elektrodenkanisters (12) in einer Form eines Zylinders mit einem Deckelabschnitt (12a), wobei der negative Elektrodenkanister (12) die Form eines doppelstufigen Zylinders mit abnehmenden Innendurchmessern zum Deckelabschnitt hin einnimmt, wobei der doppelstufige Zylinder einen ersten zylindrischen Abschnitt, der einen zylindrischen Abschnitt näher zum Deckelabschnitt definiert, und einen zweiten zylindrischen Abschnitt, der einen zylindrischen Abschnitt weiter weg vom Deckelabschnitt definiert, aufweist, so dass der erste zylindrische Abschnitt eine erste gekrümmte Innenfläche (21is) aufweist, die an einem ersten Scheitelpunkt (P1) herausragt, und der zweite zylindrische Abschnitt eine zweite gekrümmte Innenfläche (22is) aufweist, die an einem zweiten Scheitelpunkt (P2) herausragt, und der Winkel ($\theta$), der durch den Bodenabschnitt (11a) und die gerade Linie (A) gebildet wird, die den ersten Scheitelpunkt (P1) und den zweiten Scheitelpunkt (P2) verbindet, von 15° bis 45° reicht, wobei der negative Elektrodenkanister (12) im positiven Elektrodenkanister (11) enthalten ist; und
Vorsehen einer elektrolytischen Lösung, die in einem Raum enthalten ist, der durch den positiven Elektrodenkanister (11) und den negativen Elektrodenkanister (12) gebildet wird,
Verpressen der Öffnung (11c) des positiven Elektrodenkanisters (11) zu einer peripheren Wand des negativen Elektrodenkanisters (12), so dass eine ringförmige Stirnfläche (11d) an einer Außenseite des ersten Scheitelpunkts (P1) des negativen Elektrodenkanisters (12) angeordnet ist und dass der Winkel ($\theta$) vor dem Verpressen $\theta b$ ist und der Winkel ($\theta$) nach dem Verpressen $\theta a$ ist und der Winkel ($\theta$) die Formel:

$$(\theta a - 5°) \leq \theta b\ (=\theta) \leq (\theta a + 5°)$$

erfüllt.

5. Verfahren nach Anspruch 4, wobei der Winkel von 20° bis 30° reicht.

6. Verfahren nach Anspruch 4 oder 5, wobei die erste gekrümmte Innenfläche (21is) und die zweite gekrümmte Innenfläche (22is) denselben Krümmungsradius haben.

**Revendications**

1. Cellule électrochimique (10) comprenant :

un boîtier d'électrode positive (11) ayant une forme d'un cylindre avec une partie inférieure (11a) ;
un boîtier d'électrode négative (12) ayant une forme d'un cylindre avec une partie de couvercle (12a) et contenu dans le boîtier d'électrode positive ; et
une solution électrolytique contenue à l'intérieur d'un espace formé par le boîtier d'électrode positive et le boîtier d'électrode négative,
dans laquelle le boîtier d'électrode négative est formé en une forme d'un cylindre à deux étages ayant des diamètres intérieurs diminuant vers la partie de couvercle,

le cylindre à deux étages ayant une première partie cylindrique définissant une partie cylindrique plus proche de la partie de couvercle, et une seconde partie cylindrique définissant une partie cylindrique plus éloignée de la partie de couvercle,
la première partie cylindrique ayant une première surface intérieure incurvée (21is) qui se projette au-del

d'un premier sommet (P1),
la seconde partie cylindrique ayant une seconde surface intérieure incurvée (22is) qui se projette au-delà d'un second sommet (P2),

et
le boîtier d'électrode positive ayant une ouverture (11c) avec une surface d'extrémité annulaire (11d) disposée sur un côté extérieur du premier sommet (P1),
**caractérisé en ce que** l'angle (θ) formé par la partie inférieure (11a) et la ligne droite (A) reliant le premier sommet (P1) et le second sommet (P2) l'un à l'autre va de 15° à 45° ; et
l'ouverture (11c) du boîtier d'électrode positive (11) étant estampée sur une paroi périphérique du boîtier d'électrode négative (12).

2. Cellule électrochimique selon la revendication 1, dans laquelle l'angle va de 20° à 30°.

3. Cellule électrochimique selon la revendication 1 ou 2, dans laquelle la première surface intérieure incurvée (21is) et la seconde surface intérieure incurvée (22is) ont le même rayon de courbure.

4. Procédé de fabrication d'une cellule électrochimique (10) comprenant les étapes suivantes :

la fourniture d'un boîtier d'électrode positive (11) ayant une forme d'un cylindre avec une partie inférieure (11a) et une ouverture (11c) ;
la fourniture d'un boîtier d'électrode négative (12) ayant la forme d'un cylindre avec une partie de couvercle (12a), l'électrode négative (12) adoptant la forme d'un cylindre à double étage ayant des diamètres intérieurs diminuant vers la partie de couvercle, le cylindre à double étage ayant une première partie cylindrique définissant une partie cylindrique plus proche de la partie de couvercle, et une seconde partie cylindrique définissant une partie cylindrique plus éloignée de la partie de couvercle, de sorte que la première partie cylindrique a une première surface intérieure incurvée (21is) se projetant au-delà d'un premier sommet (P1) et la seconde partie cylindrique ayant une seconde surface intérieure incurvée (22is) se projetant au-delà d'un second sommet (P2), et l'angle (θ) formé par la partie inférieure (11a) et la ligne droite (A) reliant le premier sommet (P1) et le second sommet (P2) l'un à l'autre allant de 15° à 45°, le boîtier d'électrode négative (12) étant contenu dans le boîtier d'électrode positive (11) ; et
la fourniture d'une solution électrolytique contenue à l'intérieur d'un espace formé par le boîtier d'électrode positive (11) et le boîtier d'électrode négative (12),
l'estampage de l'ouverture (11c) du boîtier d'électrode positive (11) sur une paroi périphérique du boîtier d'électrode négative (12) de manière à ce qu'une surface d'extrémité annulaire (11d) soit disposée sur un côté extérieur du premier sommet (P1) du boîtier d'électrode négative (12), et de manière à ce que l'angle (θ) avant l'estampage soit de θb et que l'angle (θ) après l'estampage soit de θa, et l'angle (θ) satisfaisant à la formule :

$$(\theta a - 5°) \leq \theta b \ (= \theta) \ \leq (\theta a + 5°).$$

5. Procédé selon la revendication 4, dans lequel l'angle va de 20° à 30°.

6. Procédé selon les revendications 4 ou 5, dans lequel la première surface intérieure incurvée (21is) et la seconde surface intérieure incurvée (22is) ont le même rayon de courbure.

Fig. 1

**Fig. 2**

Fig. 3

**Fig. 4A**

**Fig. 4B**

**Fig. 5A**

32os

32

32b

**Fig. 5B**

32os

32

32b

Dh

Dr

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006302597 A

- JP H09129265 A